# EUROPEAN PATENT APPLICATION

(11) **EP 4 749 558 A1**
(43) Date of publication of application: **27.05.2026**
(21) Application number: 24214263.6
(22) Date of filing: 20.11.2024
(51) Int. Cl.: G06Q 40/03, G06F 21/62

(54) **METHOD AND SYSTEM TO SECURE AUTOMATED COMPENSATION OF RECIPROCAL DEBTS**

(71) Applicant: Funky Economics Srl, 300124 Timisoara (RO)
(72) Inventor: Brenda, Mihai Cristian, Localitatea Giarmata, jud.Timis (RO); Muresan, Valentin, Localitatea Dumbravita, jud.Timis (RO); Iercan, Octavian Radu, Localitatea Livada, jud. Arad (RO); Stoiciu, Voicu Alin, Timisoara, jud. Timis (RO); Jakab, Radu Mihai, Timisoara, jud.Timis (RO); Cerna, Daniel Florin, Timisoara, jud.Timis (RO); Furdean, Victor, Timisoara, jud.Timis (RO)
(74) Representative: Vasilescu, Raluca

(57) **Abstract**

This invention refers to a method and a system to secure automated compensation of reciprocal debts of at least three users provided with user devices.

The users send user sensitive data, user statistical data, user debt data and user compensation criteria to an identity computing unit of a first server, whereas global statistical data about the users is received from one or more global statistic data sources. The identity computing unit encrypts the user sensitive data outputting anonymized user sensitive data, generates a user profile encoder, encodes the user statistical data with it, outputting encoded user statistical data, and sends the anonymized user n sensitive data, the corresponding user debt data, the user compensation criteria and the corresponding encoded user statistical data to a compensation computing unit of a second server. The compensation computing unit creates compensation rules based on the encoded user statistical data, computes a plurality of compensation circles for the user debt data based on them, selects and ranks the compensation circles that satisfy the user compensation criteria and outputs the ranked compensation circles in descending order. Then, the identity computing unit sends compensation requests to the user devices via the compensation computing unit, the latter decrypts the anonymized user sensitive data, the compensation requests being displayed on the user devices during a predetermined period of time. The compensation computing unit receives the compensation approvals, executes the compensation of the debts for the highest-ranking compensation circle in descending order, called approved compensation circle, stores the approved compensation circle in a digital ledger maintained by a database and updates the plurality of compensation circles by removal of the approved compensation circle and updates the user debt data.

## Description

### Field of the invention

The invention is related to securing and optimizing data exchanged in financial transactions. Specifically, the invention relates to a method and system to secure automated compensation of reciprocal debts.

### Terms to be used in the invention

The term "user" stands in this invention for any natural or juridical person who is in a relation of debt with another user.

The term "user device" stands in this invention for any computing device that is used by the user, including but not limited to computer, super-computer, hand-held device, servers. For the purpose of the invention, each user has a user device.

The term "debt" stands in this invention for all categories of debt that are legally recognized, irrespective of the currency. Non-limited examples of categories of debts: i) invoices, where the users are clients who owe money to the providers of goods or services or the users are the providers of goods or services and are owed money from the buyers of said goods or services; ii) loans where the users are individuals or entities who owe money to the financial institutions or to other people; iii) debts ordered by judges following court decisions where the users are people or entities who owe money to other people or entities including financial institutions; iv) taxes where the users are people or entities who owe money to local/regional/central state institutions; v) private debts among users. The debt categories can be extended to other non-financial forms of compensations in other domains with green certificates, genetic materials, etc. provided that the non-financial forms of compensations are suitable for the application of the invention.

The creditor's right to collect the debt is called "receivable" in finance, it shall be used in the invention with the same meaning. It's the opposite of the word "debt": if Mary has a debt of 30 euros to John, this means that John has a receivable of 30 euros from Mary.

The debt" within the meaning of this invention includes the cases when some users sell the receivables to other users, hoping that there is a greater chance for the compensation to be realized in this way.

When the debts referred to in the invention are expressed in different currencies, the method of the invention uses a currency convertor to convert all debts in a selected currency. The currency convertor is outside the scope of the invention.

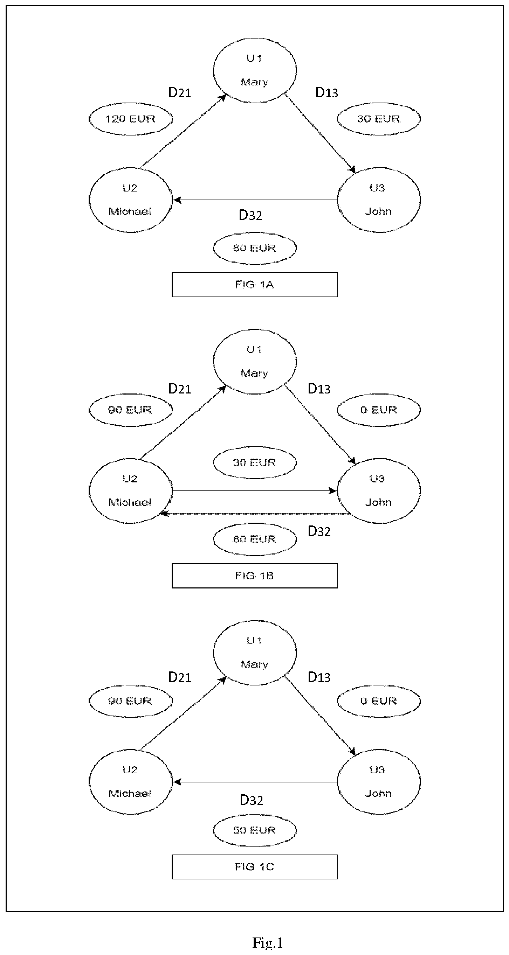

The term "debts" of a specific user includes the debts the user owes to other user(s) and the debts owed by other user(s) to said specific user. The debs are represented as oriented vertices D₂₁, D₁₃, D₃₂ while the users are represented as nodes- see Fig.1A, Fig. 1B, Fig.1C, and the example of the background of the invention.

For the ease of understanding of the invention:
in the section "basic principles of compensation schemes" the users are physical persons and the debts are private debts, as it is easier to explain the principle of compensation in this way,
in the section "background of the invention" as well as in the description of the invention the users are companies and / or individuals and the debts are invoices, as this corresponds to the most frequent situation of the real economy where the efficiency of the compensation is greater.

The skilled person shall understand that the teaching of the invention is not limited to the afore-mentioned examples.

### Background of the invention

In the economy, based on Circular Flow Theory and General Equilibrium Theory, all goods and services produced are ultimately consumed, either by households or companies. Firms produce goods and services by utilizing inputs provided by households, such as labour and capital. The income generated by households from labour and dividends payments is used to purchase the goods and services produced by firms, creating a continuous, cyclical flow of economic activity. Moreover, debts incurred within supply chains are largely balanced and compensated through the exchange of products and services that are monetized and exchanged in local currencies. As companies trade and settle obligations, the value of what is owed is often matched by the value of what is produced and delivered within these chains. This interdependence ensures that, over time, supply and demand are balanced across the economy, with debts being effectively neutralized by the ongoing production and consumption cycle, maintaining equilibrium. This cyclical interaction is fundamental to sustaining economic stability and growth.

Compensation schemes already exist in various countries. In Romania, there is one compensation scheme known for compensating the debts utilized mainly for state-owned companies arising from invoices between juridical persons with the following features:
- Each juridical person is assigned a user;
- Each user, once created, uploads the unpaid invoices into a website. Said website is basically a database comprising the users - namely the juridical persons and the respective debts that the company have one in respect to the other: for example, company A has first invoice issued in the name of company B and company B has a second invoice in the name of company A;
- Each user is free to approve or not the compensation;
- Once compensation is approved by both parties, forms for signing the juridical documents pertaining to the compensation can be downloaded from the website, each party downloads the documents countersigns them and uses them into the respective accounting systems.
- The user's data is available with the risk to compromise the trade secrets. Hence, users are only/rather state-owned companies because they have not trade secrets;

The compensation is possible either by reciprocal compensation between two users or by using the principle of the compensation circle for when at least three users are concerned.

On the other hand, the current accounting systems of many countries converge towards a system that includes the obligation of the companies to use a centralized application of the tax authorities in which the company data and the electronic invoices complying with a European standard (such as Romanian "e-factura") are uploaded to a website administered by the Tax Authorities. In this case, the Tax Authorities are in possession of the data of all companies and all the invoices issued by the companies, portions of said data being accessible to the companies within the system on a need-to-know basis.

### Basic principles of compensation schemes

The financial principle of compensation is presented below. It starts from the assumption that the participating parties are willing to compensate the reciprocal debts as much as possible so that they do not have to make or wait for payments of funds to close such debts, thus reducing the need for funds (working capital) in order to incur further debts.

As seen in Fig.1A, Fig. 1B, Fig.1C, a compensation circle includes at least three natural persons - that is at least three users, having reciprocal debts: Mary is user 1, Michael is user 2, John is user 3.

Suppose Mary owes 30 euros to John, while John owes 80 euros to Michael. Michael owes 120 euros to Mary.

As seen in Fig. 1A, the reciprocal debts are illustrated as follows:
D₂₁ is represented as a first oriented debt vertex from user 2 to user 1 because user 2 owes money to user 1. D₂₁=120 euro
D₁₃ is represented as a second oriented debt vertex from user 1 to user 3 because user 1 owes money to user 3. D₁₃ =30 euro
D₃₂ is represented as a third oriented debt vertex from user 3 to user 2 because user 3 owes money to user 2. D₃₂=80 euro

The ensemble of the debts of one iteration of the compensation is noted in this invention with Dx.

The sum of the debts before compensation is 30+80+120 =230 euros.

As seen in Fig. 1A, John (user 3) has a receivable of 30 euros from Mary (user 1), Michael (user 2) has a receivable of 80 euros from John (user 3) and Mary (user 1) has a receivable of 120 euros from Michael (user 2).

Before starting the transactions, the smallest receivable of the circle is identified: 30 euros, corresponding to John's receivable in respect to Mary.

First transaction with reference to Fig. 1B: Mary (user 1) assigns to John (user 3) the value of the smallest receivable of the circle, namely the 30 euros.

As a result of the first transaction there are no debts between Mary (user 1) and John (user 3), because, following the assignment of the smallest receivable, John is entitled to collect Mary's 30 euros directly from Michael.

Mary will be entitled to collect the remainder of the sum from Michael: 120 euros (initial)-30 euros (smallest receivable of the circle) = 90 euros.

Second transaction with reference to Fig. 1C refers to clearing the reciprocal debts of John (user 3) and Michael (user 2): John (user 3) is now entitled to collect 30 euros from Michael (user 2) as a result of the assignment of the receivable from Mary; but on the other hand, Michael (user 2) is entitled to collect 80 euros from John from the beginning.

Consequently, Michael (user 2) will be entitled to collect from John the following amount: 80 euros (initial) - 30 euros (smallest receivable of the circle) = 50 euros.

In the afore-mentioned example, by using the compensating circle depicted symbolically in Fig.1A, Fig. 1B, Fig.1C the value of money that is not effectively paid between the three users Mary, John and Michael is the smallest receivable of the circle, namely 30 euros.
The sum of the debts after compensation is 90+50 = 140 euros, which is almost half of the sum of the debts before compensation, that is 230 euros.

Note that the order of the two afore-mentioned transactions is not important, the result is the same.

Compensating reciprocal debts owed by physical or juridical persons is good for the economy because helps to avoid blocking the financial flows by reducing the amount of money that has to be effectively paid between the participating parties, as in many cases the value of the debt(s) not effectively paid can make the difference of being or not solvent for one or more users.

### Disadvantages of prior art

In our example above with Mary, John and Michael, it is easy to compensate for their mutual debts because they are only three and they are supposed to know each other. But the principle described is difficult to implement for larger compensation circles where the users are not aware of each other.

Firstly, the aforementioned compensation scheme reveals the real fiscal identity data of the users, together with their reciprocal debts. Any trade secrets are also divulged. The lack of anonymization of the users is clearly a significant disadvantage to a large category of users, particularly the private companies, because the prior art solutions disclose their fiscal identity data. By giving free access to the fiscal identity of the users together with their debts, the business models and/or the business strategies of the users - including their trade secrets, can be deciphered by others, which leads to the possibility of losing competitive advantage of the users whose identity, debts and supply chains are made public.

Secondly, the known compensation schemes are not automated. In order to make them fully automated, finding variants of compensation circles among a huge number of users - if the compensation circles are computed by themselves, requires huge computing resources such as but not limited to processing power, memory and memory bandwidth of the computers, storage and networking capabilities and time of processing data for calculating the compensation variants and exchanging data between the users for the purpose of compensation, which makes the compensation unaffordable for the large majority of the users in large compensation circles.

On the other hand, the current evolution of the society has brought the opportunity to gather together in the same place a large number of participating users and their reciprocal debts. However, neither the current compensation scheme, nor the databases maintained by various entities have ways to pro-actively seek compensation schemes between the participating users. Should they pro-actively seek compensation schemes, they would encounter the same problem of huge computing resources needed for the system to work.

Additionally, there are no attempts to reduce the need for computing resources by using and processing statistical data for micro- (localized supply chains) and macro activities (macro economical dynamics, growth, transactions categories) in order to increase the proportion of compensated debts for a given number of total debts.

### Problem solved by the invention

The invention aims to enhance the efficiency of distributing computing resources for automating debt compensation while safeguarding user-sensitive data, which in its turn opens the possibility to consolidate all the debt data in a single place. In particular, the invention aims to:
secure the user sensitive data in order to instil trust to users,
save computing resources, such as but not limited to processing power, memory and memory bandwidth of the computers, storage and networking capabilities and time of processing data.

### Summary of the invention

In a first aspect of the invention, it is provided a method to secure automated compensation of reciprocal debts owed by at least three users, provided with respective user devices, each user device comprising:
user sensitive data,
user statistical data,
user debt data for at least one debt of the user to another user from the at least three users, and
a set of user compensation criteria,
the method comprising the following steps in one iteration:
Step 1: carried out by an identity computing unit of a first server
   receiving the user sensitive data together with the corresponding user debt data, the user statistical data and the set of user compensation criteria, from the user devices,
   receiving global statistical data about all users from one or more global statistic data sources,
Step 2: carried out by the identity computing unit
   Sub-step 2-1
      encrypting the user sensitive data by using a private encryption key, outputting anonymized user sensitive data,
   Sub-step 2-2
      generating a user profile encoder,
      breaking down the global statistical data by statistical field, selecting one or more relevant statistical fields corresponding to the user statistical data,
      encoding the user statistical data with the user profile encoder applied to the statistical data of the one or more relevant statistical fields, outputting encoded user statistical data,
      the encoding including at least one of the following:
         adding specific weights to the one or more relevant statistical fields, and
         quantizing the global statistical data for the one or more relevant statistical fields,
      sending the anonymized user sensitive data together with the corresponding user debt data, the user Un compensation criteria, and the encoded user statistical data, to a compensation computing unit of a second server,
Step 3: carried out by the compensation computing unit
   receiving from the identity computing unit the anonymized user sensitive data, the corresponding user debt data, the user compensation criteria and the corresponding encoded user statistical data,
   storing in a database of the second server the anonymized user sensitive data, the corresponding user debt data, the user compensation criteria and the corresponding encoded user statistical data received from the identity computing unit,
Step 4: carried out by the compensation computing unit
   creating a set of compensation rules based on the encoded user statistical data and storing same in the database,
   computing a plurality of compensation circles by applying a compensation algorithm to said user debt data, based on the compensation rules, each compensation circle of the plurality of compensation circles comprising user debt data of concerned anonymized users,
   selecting and ranking the compensation circles that satisfy the user compensation criteria, outputting ranked compensation circles in descending order, forming a plurality of ranked compensation circles,
Step 5: carried out by the compensation computing unit
   receiving from the compensation computing unit compensation requests for the concerned anonymized users corresponding to each of the ranked compensation circles in descending order,
   decrypting the anonymized user sensitive data of the concerned anonymized users by using the private encryption key, outputting the user sensitive data of the respective concerned users,
   forwarding the compensation requests to each respective user device of the concerned users and displaying on the user devices of all the concerned users corresponding to the plurality of ranked compensation circles for sending compensation approvals during a predetermined period of time,
Step 6: carried out by the compensation computing unit
   receiving the compensation approvals from the user devices of all the concerned users by means of the identity computing unit,
   executing the compensation of the at least one debt of the user to another user for the highest-ranking compensation circle in descending order, called approved compensation circle,
   storing the approved compensation circle in a digital ledger maintained by the database DB2,
   updating the plurality of compensation circles by removal of the approved compensation circle and updating the user debt data for the next iteration of the method.

In a second aspect of the invention, is provided a system for secure automated compensation of reciprocal debts owed by at least three users, the system comprising:
at least three user devices corresponding to the at least three users, communicatively coupled to a first server,
the first server comprising an identity computing unit, the identity computing unit communicatively coupled to the at least three user devices
a second server comprising a compensation computing unit communicatively coupled to a database,
the identity computing unit communicatively coupled to the compensation computing unit, and
one or more global statistic data source, communicatively coupled to the identity computing unit.
wherein the at least three user devices, the identity computing unit, the compensation computing unit, the database, and the one or more global statistic data source are configured to apply the corresponding steps of the method of secure automated compensation of any of the method embodiments.

In a third aspect of the invention, it is provided a first non-transitory computer-readable storage medium encoded with a first computer program, the first computer program comprising instructions executable by the first server of the system of any preferred embodiments, which, upon such execution, causes the first server to perform operations of the method to secure automated compensation of reciprocal debts of any of the preferred method embodiments.

In a fourth aspect of the invention, it is provided a second non-transitory computer-readable storage medium encoded with a second computer program, the second computer program comprising instructions executable by the second server of the system of any preferred embodiments, which, upon such execution, causes the second server to perform operations of the method to secure automated compensation of reciprocal debts of any of the preferred method embodiments.

Any feature in one aspect of the invention may be applied to other aspects of the invention, in any appropriate combination. In particular, method features may be applied to device features, and vice versa.

Wherever applicable, means - plus - function features may be expressed alternatively in terms of their corresponding structure, such as a suitably programmed processor and associated memory.

Particular combinations of the various features of the invention can be implemented and/or supplied and/or used independently.

### Advantages of the invention

The following advantages are obtained by applying the invention:
securing the user sensitive data,
saving computing resources such as but not limited to processing power, memory and memory bandwidth of the computers, storage and networking capabilities and time of processing data for the users and the servers of the system of the invention, resulting in a global save of resources and a better distribution of the computing resources,
as a consequence of saving and better distributing computing resources, the invention is suitable to be used when the data flowing through the system of the invention when applying the method of the invention qualifies as "big data".

### Brief description of the drawings

Fig. 1A - basic principle of compensation circle - initial debts
Fig 1B - basic principle of compensation circle - first transaction
Fig. 1C - basic principle of compensation circle - second transaction
Fig. 2A- step 1 of the method according to the invention
Fig. 2B- step 2 of the method according to the invention
Fig. 2C- step 3 of the method according to the invention
Fig. 2D- step 4 of the method according to the invention
Fig. 2E- step 5 of the method according to the invention
Fig. 2F- step 6 of the method according to the invention
Fig. 3 - the system according to the invention

### Detailed description and example of realization

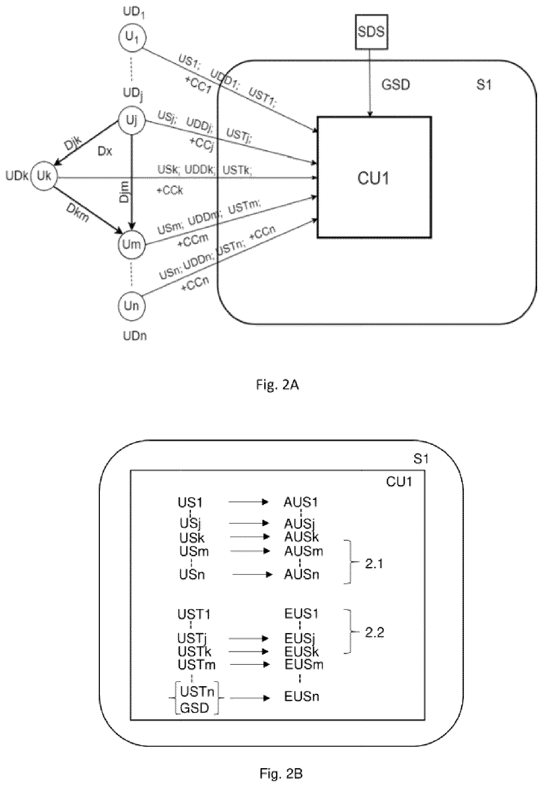

With reference to Figs. 2A to 2E, the invention discloses in a first aspect a method to secure automated compensation of reciprocal debts owed by at least three users Un.

Each user Un is provided with a respective user device UDn.

The at least three users Un form a plurality of users U_{N}. Each user Un has at least one debt to another user Un from the plurality of users U_{N}.

The skilled person shall understand that it is possible for each user Un to be creditor and debtor in respect to other users Un from the plurality of users U_{N}.

Each user Un has three types of user primary data on his corresponding user device UDn: user Un sensitive data USn, user Un statistical data and user Un debt data UDDn corresponding to said at least one debt of the user Un to another user from the at least three users Un, and a set of user Un compensation criteria CCn.

For the ease of understanding of the invention, a number of three users was chosen in a non-limiting example of realization, that will be hereafter referred to as "the example of realization": user Uj, user Uk, and user Um, who are willing to compensate their reciprocal debts, provided with the respective user devices UDj, UDk, UDm

The skilled person will understand that the teaching of the invention applies for any number of users Un that is greater than or equal to three.

The user Un sensitive data USn is defined as any type of user primary data that, if divulged, can produce harm to the users Un.

A non-limiting example of user Un sensitive data USn that shall be used to exemplify the teaching of the invention is the user fiscal identity data or any other data that could identify the user Un. For companies, this means name and address of the company, unique identification number(s), etc.

The user Un statistical data USTn is defined as any statistic data that is collected and processed according to the statistical rules, such as but not limited to:
- for the physical persons: the place where the User Un lives, the age, sex, purchase preferences, debt history, etc.;
- for the juridical persons: the place where the user Un carries out the activity, the number of employees, the year of incorporation, the field(s) of activity, number of subsidiaries or affiliated companies, debt history, main business partners, etc.

The user Un debt data UDDn is defined in terms of nature of the debt - i.e. invoice, monetary value of the debt and the monetary value of the debt. No other type of data regarding the debt is included in the user Un debt data UDDn (e.g. the name/trademark of the products sold), in order to avoid identification of the users Un, as the debt data is not encrypted nor encoded in the future steps.

The user Un compensation criteria CCn are used for the selecting and ranking operations of step 4 of the method, as it will be disclosed later on.

Non-limiting examples of the user Un compensation criteria CCn are: debts older than a certain debt age- such as 30 days, debts owed by a particular user Un.

The method comprises the following steps in one iteration:
Step 1- see Fig. 2A, is carried out by an identity computing unit CU1 of a first server S1. Said identity computing unit CU1:
   receives the user Un sensitive data USn together with the corresponding User Un debt data UDDn, the user Un statistical data USTn and the set of user Un compensation criteria CCn, from the user devices UDn,
   receives global statistical data GSD about all Un users from one or more global statistic data sources SDS.
   For the example of realization, the identity computing unit CU1 receives the user fiscal identity data and the corresponding user debt data from user devices UDj, UDk, UDm.
   At each iteration, the identity computing unit CU1 updates the structure and number of the plurality of users U_{N}, as well as receives updated user Un global statistical data GSD and updates of the user Un compensation criteria CCn.
Step 2- see Fig. 2B, is carried out by the identity computing unit CU1 and has two substeps that are carried out simultaneously.
   Step 2.1 In the first sub-step of step 2, the identity computing unit CU1
      encrypts the user Un sensitive data USn by using a private encryption key,
      outputting anonymized user AUn sensitive data AUSn, and
      The anonymized user AUn sensitive data AUSn correspond to anonymized users AUn which form a plurality of anonymized users AU_{N}, matching the plurality of users U_{N}.
      For the example of realization, the anonymized user AUj corresponds to the user Uj,etc,; and the anonymized user AUj sensitive data AUSj is the encrypted data of the user Uj sensitive data USj.
      A non-limiting example of the private encryption key is the algorithm AES-256, having reputed qualities of increased security.
      The anonymization of the user Un sensitive data USn could have been carried out by other means, for example by hashing said data. However, the inventors thought that the encryption of the user Un sensitive data USn contributes better to solving the problem of the invention, because the hashing- although good for data securing, requires more computing resources as compared to the encryption, at least because it requires an additional database in the first server S1 for keeping the correspondence between the user Un sensitive data USn and the anonymized user AUn sensitive data AUSn.
   Step 2.2 In the second sub-step of step 2, the identity computing unit CU1 generates a user profile encoder, breaks down the global statistical data GSD by statistical field corresponding to the user Un statistical data USTn, selects one or more relevant statistical fields, and encodes the user Un statistical data USTn with the user profile encoder applied to the statistical data of the one or more relevant statistical fields, outputting encoded user statistical data EUSn,

The user profile encoder is a function for encoding the statistical data of the one or more relevant statistical fields. The encoded user statistical data EUSn correspond to the anonymized user AUn sensitive data AUSn.

The encoding of step 2.2. includes at least one of the following:
adding specific weights to the one or more relevant statistical fields, and
quantizing the global statistical data GSD for the one or more relevant statistical fields.

For example, the user Uj is a company with €1 billion in revenue, 35,000 employees, located in Croatia and operating in the steel industry. The encoding algorithm applies a function to the global statistical data GSD of the users Un, generating a structured series based on selecting relevant statistical fields from the one or more relevant statistical fields and assign specific digit lengths to each selected relevant statistical field. For instance, the first selected relevant statistical field is the company's industry classification - the steel industry, the second selected relevant statistical field is the annual turnover - the €1 billion in revenue, the third selected relevant statistical field is the number of employees - the 35,000 employees, and the fourth selected relevant statistical field is the geographic location - Croatia. Each selected relevant statistical field is encoded with a designated number of digits - for instance, 4 digits for the industry classification, etc.

The above-captioned function is applied to the global statistical data GSD about all Un users through an encoding algorithm that generates letters and natural numbers and create series based on several data dimensions that correspond to the selected relevant statistical fields put together and digits allocated to each data dimension. The geographic location is stored on a grid that hides the exact address by using a quadtree indexing method comprising levels of precision. This method layers the geographical location data, therefore it is possible to pinpoint the geographic location precisely. For instance, level of precision 20 in the grid shows the geographic location within 1 meter of precision, while level of precision 1 shows a global view.

The encoding includes adding specific weights, or quantizing the global statistical data GSD, or adding the specific weights together with quantizing the global statistical data GSD.

The specific weights are assigned to each relevant statistical field in order to emphasize which of the relevant statistical field is more important, for example the most important is the turnover and the less important is the geographical location.

The quantization algorithm is used to quantize the global statistical data GSD, that is to remove accuracy to a predetermined level, e.g. the revenue of 1 billion is transformed to an interval: from 0.8 billion to 1.1 billion.

The weights as well as the quantization algorithm are updated based on the updates of the global statistical data GSD, the user Un compensation criteria CCn, the Un statistical data and the compensation rules.

At the end of sub-step 2-2, the identity computing unit CU1 sends the anonymized user AUn sensitive data AUSn together with the corresponding user Un debt data UDDn, the user Un compensation criteria CCn, and the encoded user statistical data EUSn, to a compensation computing unit CU2 of a second server S2.

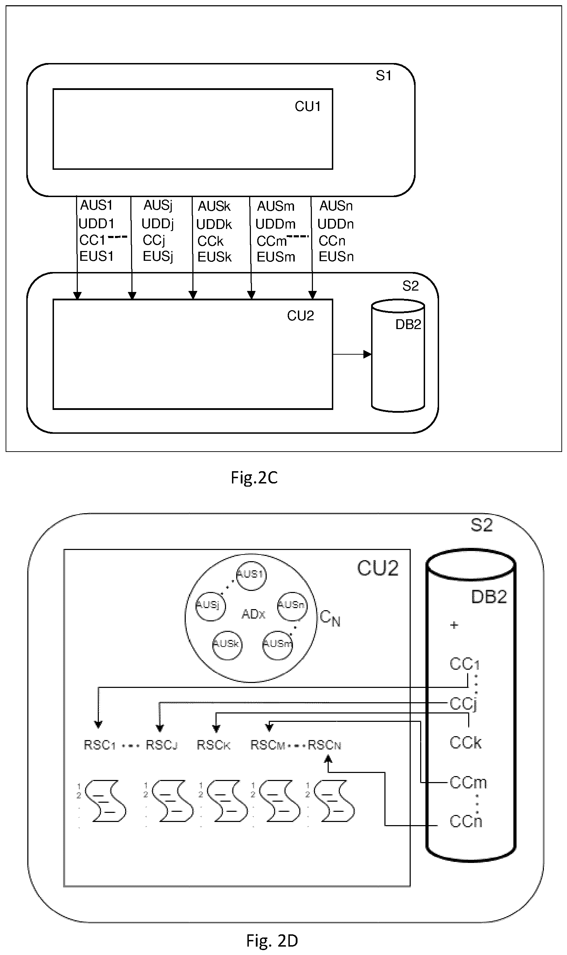

### Step 3- see Fig. 2C, is carried out by the compensation computing unit CU2.

The compensation computing unit CU2 receives from the identity computing unit CU1 the anonymized user AUn sensitive data AUSn, the corresponding User Un debt data UDDn, the user Un compensation criteria CCn, and the corresponding encoded user statistical data EUSn.

Then, the following are stored in a database DB2 of the second server S2: the anonymized AUn user sensitive data AUSn, the corresponding user Un debt data UDDn, the user Un compensation criteria CCn and the corresponding encoded user statistical data EUSn received from the identity computing unit CU1.

At this stage, looking at the two servers, it is time to understand that the first server S1 is dedicated to the operations with the user Un sensitive data USn - which in the example of realization refers to the user fiscal identity data, reason for which it refers to the real economy, whereas the second server 2 is dedicated to the operations with the anonymized user AUn sensitive data, reason for which it refers to the anonymized economy.

In the real economy, the User Un debt data UDDn for all users Un involved in one iteration is noted with Dx, whereas in the anonymized economy the User Un debt data UDDn for all anonymized users AUn is noted with ADx.

In the example of realization:
in the real economy, the User Un debt data UDDn is represented as oriented debt vertices Dⱼₖ, Dₖₘ Dₘⱼ. The oriented debt vertex from Uj to Uk, means that user Uj owes the debt Djk to the user Uk, as seen in Fig. 2A,
in the anonymized economy, User Un debt data UDDn is represented as oriented debt vertices ADⱼₖ, ADₖₘ ADₘⱼ connecting the three anonymized users AUj, AUk, Aum, the debt vertices ADⱼₖ, ADₖₘ ADₘⱼ stored in the database DB2.

### Step 4 - see Fig. 2D is carried out by the compensation computing unit CU2.

Firstly, a set of compensation rules is created based on the encoded user statistical data EUSn and stored in the database DB2.

Then, a plurality of compensation circles C_{N} is computed by applying a compensation algorithm to said User Un debt data UDDn, based on the compensation rules, each compensation circle Cn of the plurality of compensation circles C_{N} comprising User Un debt data UDDn of concerned anonymized users AUn.

Each compensation circle Cn represents a suggested compensation scheme for the anonymized users AUn that are part of it, reason for which they are called "concerned anonymized users AUn". At this stage, no actual compensation has taken place yet.

The plurality of compensation circles C_{N} includes multiple combinations of users and any combinations of debts.

Each compensation circle Cn is computed by using graphs having nodes and vertices, where the nodes of the graphs are the anonymized users AUn and the debts are oriented vertices having the vertex direction showing the debt direction from one anonymized user AUn to another anonymized user AUn and by using graph partitioning algorithms to compute said compensation circles Cn.

The computation of said compensation circles Cn is a vertex cover problem. The solution space grows exponentially with the size of the graph in the number of nodes and vertices. The monetary value of the compensation schemes increases with the number of users found to have reciprocal debts: the larger the number of users, the greater the value of finding the optimal or desired compensation schemes. The compensation algorithm uses Johnson's algorithm for finding Elementary Circuits in Directed Graphs in a non-limiting adaptation.

The plurality of compensation circles C_{N} is made of compensation circles Cn that satisfy the compensation rules.

The compensation rules have the purpose to increase the number of executed compensations in the last step, thus contributing to saving computing resources and making the method of the invention more efficient. In the absence of the compensation rules, the number of compensation circles Cn would be too large and the computing resources would be wasted.

The compensation rules include prioritization rules. The encoding of the user Un statistical data USTn carried out in sub-step 2.2. allows the compensation computing unit CU2 to create said prioritization rules, while avoiding disclosure of the user Un sensitive data USn.

A non-limiting example of the compensation rules using prioritization is explained here: The compensation algorithm uses the corresponding encoded user statistical data EUSn to create the nodes and vertices by putting on a prioritization rule to select users located only in the European Union. By reducing the number of nodes and vertices in the graph, the solution space is further reduced, further optimising the computing resources.

Then, the compensation computing unit CU2 selects and ranks the compensation circles Cn that satisfy the user Un compensation criteria CCn, outputting ranked compensation circles RSCn in descending order forming a plurality of ranked compensation circles RSC_{N}

Given that each debt can be part of various compensation circles Cn, the user Un compensation criteria CCn rank the compensation circles Cn from the perspective of each concerned user Un - corresponding to each concerned anonymized users AUn.

The fact that at each iteration, the second sub-step of step 2 the identity computing unit CU1 updates the user Un global statistical data GSD, enables the update of the encoded user statistical data EUSn, giving said encoded user statistical data EUSn a dynamical character.

A non-limiting example of selection and ranking is based on the monetary value of the debts: either the largest debt values are ranked first or the smallest debt values are ranked first depending on the preferences of the users expressed as user Un compensation criteria CCn.

Taking the example of realization, for each of the three anonymized users AUj, AUk, AUm, there is a corresponding plurality of ranked compensation circles: a plurality of ranked compensation circles RSC_{J} for the anonymized user AUj, a plurality of ranked compensation circles RSC_{K} for the anonymized user AUk, a plurality of ranked compensation circles RSC_{M} for the anonymized user AUm.

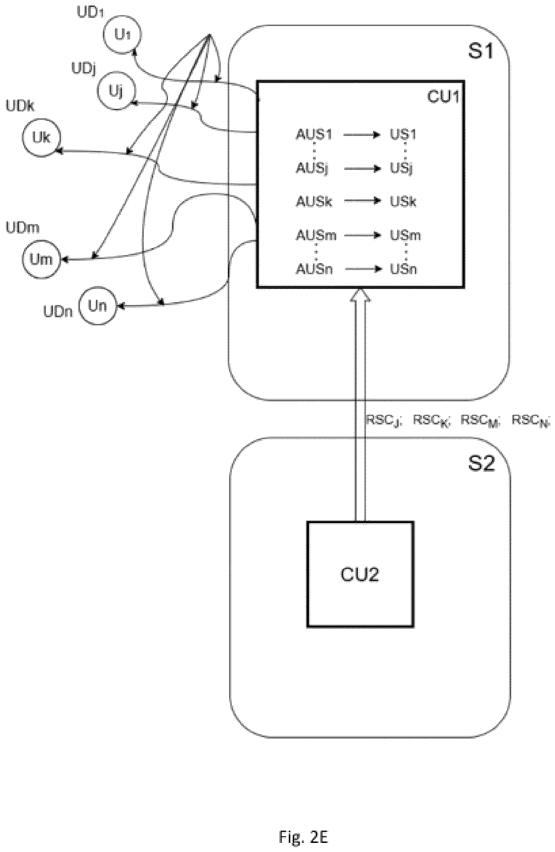

### Step 5 - see Fig. 2E, is carried out by the compensation computing unit CU1.

The identity computing unit CU1 receives from the compensation computing unit CU2 the ranked compensation circles RSCn for the concerned anonymized users AUn corresponding to each of the ranked compensation circles RSCn from the plurality of ranked compensation circles RSC_{N}, in descending order.

Now it's time to "go back" to the real economy, where the compensation computing unit CU1 decrypts the anonymized user AUn sensitive data AUSn of the concerned anonymized users AUn by using the private encryption key, outputting the user Un sensitive data USn of the respective concerned users Un.

Then, the compensation computing unit CU1 forwards the compensation requests to each respective user device UDn of the concerned users Un and displays on the user devices UDn of all the concerned users Un corresponding to the plurality of ranked compensation circles RSC_{N} for sending compensation approvals during a pre-determined period of time.

Said display of the plurality of ranked compensation circles RSC_{N} is carried out such that, for each of the concerned users Un his own user Un debt data UDDn be displayed, meaning that each of the concerned users Un will see on his respective the user devices UDn only the debts that he owes to other concerned users Un and the debts he is owed by other concerned users Un, in this way further contributing to saving computing resources.

The compensation request can include accounting and/or legal documentation that is outside the scope of this invention.

A non-limiting example of the pre-determined period of time is 30 minutes.

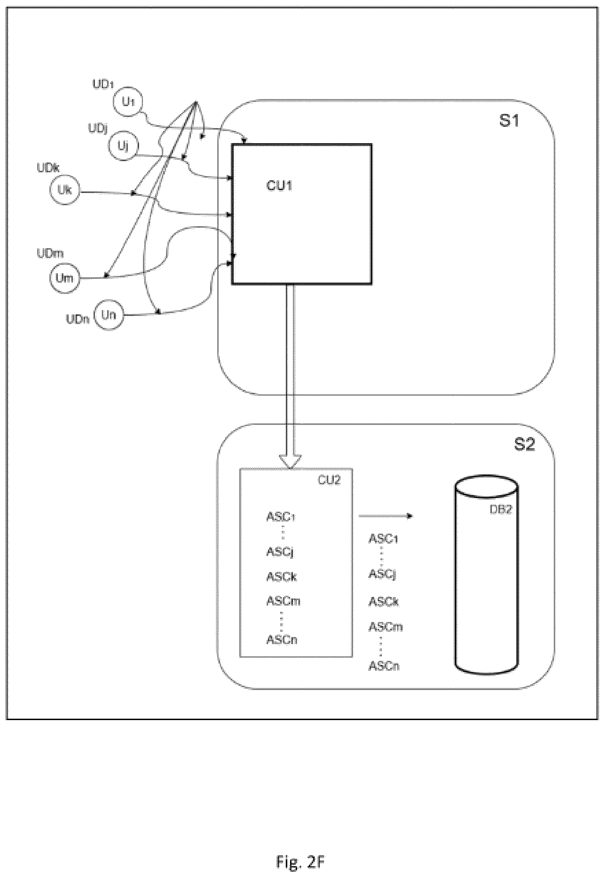

### Step 6 - see Fig. 2F, is carried out by the compensation computing unit CU2.

From the perspective of a specific concerned user Un, having a corresponding specific user Un debt, the compensation of said specific user Un debt occurs when one specific ranked compensation circle RSCn from the plurality of ranked compensation circles RSC_{N} that includes said specific user Un debt is approved by all the concerned users Un. This reasoning applies to each and every user Un debt of the current iteration.

The compensation approvals are received from the user devices UDn of all the concerned users Un by means of the identity computing unit CU1,

The compensation of the at least one debt of the user Un to another user Un is executed for the highest-ranking compensation circle RSCn in descending order, called approved compensation circle ASCn

The approved compensation circle ASCn is stored in a digital ledger maintained by the database DB2.

The plurality of compensation circles C_{N} is updated as well as the User Un debt data UDDn for the next iteration of the method.

The update of the plurality of compensation circles C_{N} refers to the removal of the approved specific ranked compensation circle RSCn.

At each iteration, steps 4, 5 and 6 are carried out for various pluralities of compensation circles C_{N}, each plurality referring to its own concerned users Un. This means that each above-captioned respective plurality is updated at the end of step 6.

Taking the example of realization, there is a plurality of specific ranked compensation circles RSC_{J-k-M} at the intersection of the pluralities of ranked compensation circles RSC_{J} RSC_{K} and RSC_{M}.In case the plurality of specific ranked compensation circles RSC_{J-k-M} has more than one approved ranked compensation circles RSCⱼ₋ₖ₋ₘ, the compensation is executed for the highest-ranking compensation circles RSCn in descending order.

If there is no compensation approval by all the concerned users Un during said predetermined period of time for sending compensation approvals, this is considered a compensation refusal of the plurality of ranked compensation circle RSC_{N}.

In this case, a new iteration of the method is triggered, an updated plurality of ranked compensation circles RSC_{N} is generated, which is displayed on the user devices UDn of all the concerned users Un, requiring an update of the set of compensation rules since the old set of compensation rules had the effect of the compensation refusal.

The invention as claimed has the advantage of securing the user Un sensitive data USn in two different ways. The encryption in step 2.1. secures the user Un sensitive data by anonymizing said data, while the encoding in step 2.2 contributes to securing the user Un sensitive data USn in another way by processing the global statistical data GSD about all Un users for the purpose of outputting the encoded user statistical data EUSn data that will be used in step 4 to for the compensation rules based on which the plurality of compensation circles C_{N}, is computed.

The advantage of global saving and better distributing computing resources is obtained by applying the invention for at least the following reasons:
the significant computational power, memory, memory bandwidth, storage and networking capabilities are needed only by the two servers used in the invention, where all relevant data for the reciprocal compensation of the debts is stored and aggregated, freeing the users from the burden of allocating computing resources for compensation,
the dynamical character of the encoded user statistical data EUSn contributes to making the method of the invention more efficient, because the updated encoded user statistical data EUSn is used for the update of the compensation rules,
the ranked compensation circles are outputted as a result of applying two sets of different rules corresponding to two different perspectives, namely the compensation rules of the compensation computing unit CU2 and, respectively, the preferences of the users expressed as the user Un compensation criteria CCn. Both sets of the afore-mentioned different rules are conceived to increase the number of executed compensations in each iteration, thus contributing to further saving computing resources and making the method of the invention more efficient. Reaching more executed compensations in less iterations clearly has the advantage of saving and optimizing the resources.

By combining the advantage of saving and better distributing computing resources with the advantage of securing the user Un sensitive data USn, the inventors managed not only to resolve the technical problem of the invention, but also to improve and optimize the working conditions of the computers used for automating the compensation of debts, while preserving the user Un sensitive data USn from divulgation.

As a consequence of saving and better distributing computing resources, the invention is suitable to be used when "big data" is flowing through the system of the invention when applying the method of the invention.

In one preferred embodiment the ranked compensation circles RSCn of the plurality of ranked compensation circles RSC_{N} are sequentially sent in descending order during the predetermined period of time until receiving compensation approvals of all the concerned users Un; the compensation approvals are received automatically.

This preferred embodiment has the advantage of fully automating the method of the invention, in this way further optimizing the computing resources used, which saves time to the users and makes the computing resources involved more efficient.

In an alternative preferred embodiment, the ranked compensation circles RSCn of the plurality of ranked compensation circles RSC_{N} are simultaneously sent to the concerned users Un.

The compensation is executed for the highest-ranking compensation circles RSCn in descending order.

This preferred embodiment has the advantage that it suits those users Un that still want to make individual choices in respect to the compensation.

In another preferred embodiment, the storing of the approved compensation circles ASCn in the digital ledger is locked with a digital ledger chain in order to preserve and secure their integrity.

This preferred embodiment has the advantage that it further contributes to securing the data during the compensation process.

One non-limiting digital ledger chain is the block-chain technology.

So far, the method of the invention refers to debts incurred in the past, that is receivables for the users Un that act as creditors.

Desiring to further increase the number of executed compensations in each iteration, the inventors thought that some of the future debts can be reasonably anticipated, for example all the debts that are expected to occur in the future such as but not limited to subscriptions, payment of utilities, royalties, capacity to turn the receivables into goods to be traded in the future, etc., called potential future user Un debts.

To meet the above requirements, in another preferred embodiment, the set of compensation rules based on the encoded user statistical data EUSn further comprises rules for identifying potential future user Un debts. A non-limiting example of the rules for identifying potential future user Un debts refers to detecting regular debts incurred in the past by a particular user Un to another particular user Un monthly or quarterly and extrapolating them in the future.

Step 4 further comprises identifying the potential future user Un debts based on the rules for identifying potential future user Un debts and adding corresponding potential future user Un debts data to said user Un debt data UDDn. Now, the user Un debt data UDDn includes the debts incurred in the past and the potential debts.

The computing of the plurality of compensation circles C_{N} is carried out according to any of the afore-mentioned preferred embodiments, the difference being that one part of the compensation circles Cn include the potential future user Un debts, while the other part does not include the potential future user Un debts. The selecting and ranking of the compensation circles Cn is carried out according to any of the afore-mentioned preferred embodiments the difference being that one part of the ranked compensation circles RSCn include the potential future user Un debts, while the other part does not include the potential future user Un debts.

Step 5 further includes displaying on the user devices UDn a pre-determined additional period of time for sending compensation approvals. Said additional period of time can be greater than or equal to zero, to allow flexibility. If the additional period of time is greater than zero, its value is displayed together with the ranked compensation circles RSCn that include the potential future user Un debts.

The display on the plurality of ranked compensation circles RSC_{N} is made such that the ranked compensation circles RSCn that include the potential future user Un debts be identifiable for example by using other graphical elements as compared with the ranked compensation circles RSCn that do not include the potential future user Un debts.

For the ranked compensation circles RSC_{N} that include the potential future user Un debts, the execution of the compensation in step 6 is delayed with a selectable delay. A non-limiting example of the selectable delay is "delay the execution one week from current date".

The compensation request can have in a variant of this preferred embodiment, a more complex nature, for example it can include a request to ship certain quantity of goods to compensate a specific future debt.

This preferred embodiment can be combined with any of the afore described preferred embodiments as its teaching does not depend on the teaching of said prior preferred embodiments.

In a variation of the above-described preferred embodiment including the potential future user Un debts, the inventors realized that approving compensation of the potential future user Un debts may be risky, therefore providing some kind of assurance in respect to said potential future user Un debts is helpful to instil trust to the users Un, such that the number of executed compensations in each iteration be further increased as compared with said above-described preferred embodiment.

Step 1 further comprises receiving by the identity computing unit CU1 of creditworthiness data for some of the users Un from a credit worthiness external source, which includes one or more banking institutions, one or more state agencies, and in general any type of institutions that can provide raw or processed data about the creditworthiness of the users Un. Said creditworthiness data is received for some of the users Un from the plurality of users U_{N} and not for all, namely for those users that have potential future user Un debts and credit worthiness external source is able to provide such creditworthiness data. The content and the format itself of the creditworthiness data is outside the scope of the invention.

In sub-step 2-1, the identity computing unit CU1 further calculates a User Un creditworthiness basic score by aggregating the creditworthiness data. A non-limiting example of the creditworthiness basic score is from 70 to 120.

Taking the example of realization, user Uj has the creditworthiness basic score of 45, user Uk has the creditworthiness basic score of 49 and user Um has the creditworthiness basic score of 72.

In step 3, the identity computing unit CU1 further sends the User Un creditworthiness basic score to the compensation computing unit CU2.

In sub-step 4, the compensation computing unit CU2 further calculates a User Un compensation score. This score evaluates how many compensation circles RSCn were executed in the past for a particular User Un in a determined past period of time, giving information on the compensation capacity of said user. For the example of realization, user Uj had 89% executed compensation circles RSCn - receiving the compensation score of 59, user Uk had 45% compensation circles RSCn - receiving the compensation score of 45, and user Um had 23% compensation circles RSCn - receiving the compensation score of 24 for the same determined past period of time.

Then, the compensation computing unit CU2 merges the creditworthiness basic score with the User Un compensation score, outputting a User Un combined creditworthiness score and adds the User Un combined creditworthiness score to the set of compensation rules.

Taking the above example, for the sake of simplifying the teaching, let's say that the merge of the creditworthiness basic score with the User Un compensation score is by adding the two scores.

Therefore, for the example of realization, the user Uj combined creditworthiness score is 104, the user Uk combined creditworthiness score is 94 and the user Um combined creditworthiness score is 96.

The user Un compensation criteria CCn include a threshold for the User Un creditworthiness score, for example above 95. This threshold can be modified when the compensation rules are updated.

The selection and ranking of the compensation circles Cn in step 4 is made for the compensation circles Cn for which the User Un combined creditworthiness score is above the threshold, for example above 95. This means that user Uk is no longer included in the compensation circles Cn of the current iteration.

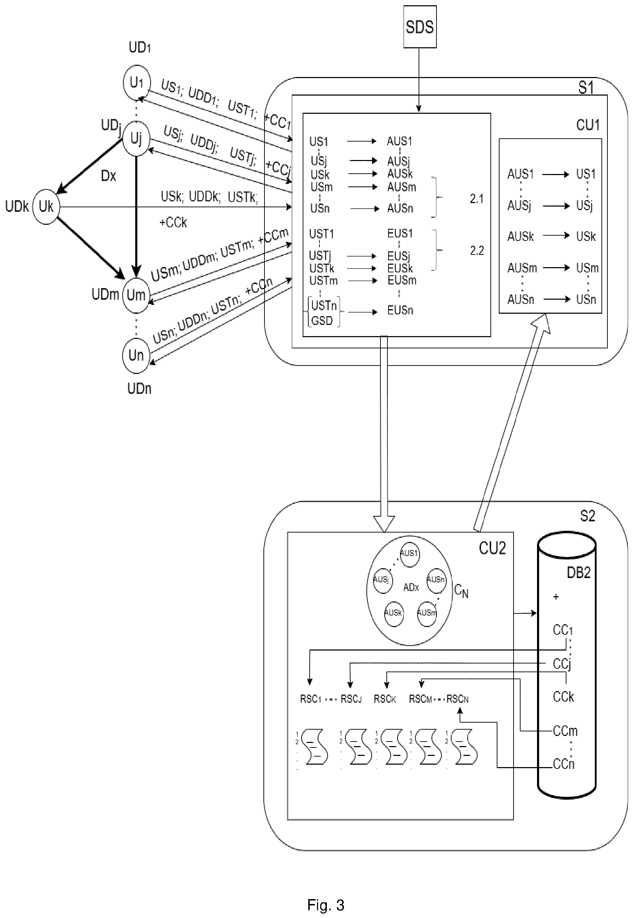

In a second aspect of the invention, with reference to Fig. 3, it is provided a system for secure automated compensation of reciprocal debts owed by at least three users Un, the system comprising:
at least three user devices UDn corresponding to the at least three users Un, communicatively coupled to a first server S1,
the first server S1 comprising an identity computing unit CU1, the identity computing unit CU1 communicatively coupled to the at least three user devices UDn
a second server S2 comprising a compensation computing unit CU2 communicatively coupled to a database DB2,
the identity computing unit CU1 communicatively coupled to the compensation computing unit CU2, and
one or more global statistic data source SDS, communicatively coupled to the identity computing unit CU1.

The at least three user devices UDn, the identity computing unit CU1, the compensation computing unit CU2, the database DB2, and the one or more global statistic data source SDS are configured to apply the corresponding steps of the method of secure automated compensation of any of the preferred method embodiments.

The user devices UDn are any type of devices provided with processing unit(s), memory and telecommunication means such as but not limited to computers or handheld devices.

The term "server" encompasses one or more physical or virtual servers which fulfil the same task and have the specific configurations for carrying out the invention as specified in the specification, claims and drawings.

Both servers 1 and 2 include the usual components such as processors and memories necessary for carrying out the steps of the method, said usual components being outside the scope of the invention.

The term "communicatively coupled" encompasses electronic connection by telecommunication means, irrespective of the telecommunication protocols as well as encrypted communication between components placed on the same printed circuit board or on different physical devices.

The first server S1 and the second server S2 are either located remotely from one another, or are placed in physical contact without affecting the teaching of the invention.

The term "computing unit", encompasses a single computing unit or a plurality of computing units communicatively coupled among themselves. In case of a plurality of computing units, the components are either located remotely from one another or are placed in physical contact without affecting the teaching of the invention.

The user devices UDn are configured to:
send the user Un sensitive data USn together with the corresponding User Un debt data UDDn, the user Un statistical data USTn and the set of user Un compensation criteria CCn to the identity computing unit CU1,
receive the compensation requests from the identity computing unit CU1, displayed on said user devices UDn together with the plurality of ranked compensation circles RSC_{N},
send the compensation approvals and the compensation refusals to the identity computing unit CU1.

The identity computing unit CU1 is configured to:
receive the user Un sensitive data USn together with the corresponding User Un debt data UDDn, the user Un statistical data USTn and the set of user Un compensation criteria CCn from the user devices UDn,
receive the global statistical data GSD from the one or more global statistic data,
encrypt the user Un sensitive data USn by using a private encryption key,
output the anonymized user AUn sensitive data, and send same together with the corresponding User Un debt data UDDn and the user Un compensation criteria CCn to the compensation computing unit CU2
generate the user profile encoder, encode the user Un statistical data USTn and output encoded user statistical data EUSn,
receive the compensation requests from the compensation computing unit CU2,
decrypt the anonymized user AUn sensitive data of the concerned anonymized users AUn by using the private encryption key, and output the user Un sensitive data USn of the respective concerned users Un,
forward the compensation requests to the user devices UDn, and display them on the user devices UDn
receive the compensation approvals from the user devices UDn and forward same to the compensation computing unit CU2.

When encoding in step 2.2. the identity computing unit CU1 is configured to is configured to carry out at least one of the following:
add specific weights to the one or more relevant statistical fields, and
quantize the global statistical data GSD for the one or more relevant statistical fields.

The compensation computing unit CU2 is configured to:
receive from the identity computing unit CU1 the anonymized user AUn sensitive data AUSn, the corresponding User Un debt data UDDn, the user Un compensation criteria CCn and the corresponding encoded user statistical data EUSn, and store same in a database DB2 of the second server S2,
create a set of compensation rules,
compute a plurality of compensation circles C_{N},
select and rank the compensation circles Cn, output ranked compensation circles RSCn in descending order,
send compensation requests to the identity computing unit CU1,
receive the compensation approvals from the identity computing unit CU1,
execute the compensation of the at least one debt of the user Un to another user Un,
update the plurality of compensation circles C_{N}.
update the User Un debt data UDDn.

The database DB2 is configured to:
store the set of compensation rules, the anonymized user AUn sensitive data, the corresponding user Un debt data UDDn, the user Un compensation criteria CCn and the corresponding encoded user statistical data EUSn,
maintain a digital ledger for storing the approved compensation circles ASCn.

The global statistic data source SDS is configured to send global statistical data GSD to the identity computing unit CU1.

In a first alternative preferred embodiment of the system, the first server S1 and the second server S2 are physically coupled such that to be embedded in one larger server entity.

In a second alternative preferred embodiment of the system, the first server S1 and the second server S2 are remotely placed one from another communicating via telecommunication means.

The two alternative preferred embodiments further have the advantage that they allow both the use of the first server S1 and the second server S2 governed by the same entity or, alternatively, governed by different entities. For example, the first server S1 can be governed by the tax authorities, whereas the second server S2 can be governed by a company specializing in optimization of the compensations having a contract with the tax authorities.

The adaptations of the system of the invention are described below:
In a first adaptation, the compensation computing unit CU2 is configured to sequentially send compensation requests to the identity computing unit CU1
the user devices UDn are further configured to automatically send the compensation approvals,
the compensation computing unit CU2 is further configured to generate an updated plurality of ranked compensation circles RSC_{N} and to display on the user devices UDn the next ranked compensation circle RSCn in said descending order.

In a second adaptation alternative to the first adaptation, the compensation computing unit CU2 is configured to simultaneoulsy send compensation requests to the identity computing unit CU1

In a third adaptation, the compensation computing unit CU2 is further configured to lock the digital ledger with a digital ledger chain.

In a fourth adaptation, the compensation computing unit CU2 is further configured to identify the potential future user Un debts and to delay the execution of the compensation in step 6 with a selectable delay and the compensation computing unit CU1 is further configured to display on the user devices UDn a pre-determined additional period of time for sending compensation approvals.

In a fifth adaptation, the identity computing unit CU1 is further configured:
to receive the creditworthiness data from a credit worthiness external source
to calculate a User Un creditworthiness basic score and to send same to the compensation computing unit CU2.

The compensation computing unit CU2 is further configured:
to further compute a User Un compensation score, merge the creditworthiness basic score with the User Un compensation score, outputting a User Un combined creditworthiness score and add the User Un combined creditworthiness score to the set of compensation rules,
to include a threshold for the User Un creditworthiness score in the set of compensation rules,
to further select and rank the compensation circles Cn in step 4 for the compensation circles Cn for which the User Un combined creditworthiness score is above the threshold.

In a third aspect of the invention, it is provided a first non-transitory computer-readable storage medium encoded with a first computer program, the first computer program comprising instructions executable by the first server S1 of the system of any preferred embodiments, which, upon such execution, causes the first server S1 to perform operations of the method to secure automated compensation of reciprocal debts of any of the preferred method embodiments.

In a fourth aspect of the invention, it is provided a second non-transitory computer-readable storage medium encoded with a second computer program, the second computer program comprising instructions executable by the second server S2 of the system of any preferred embodiments, which, upon such execution, causes the second server S2 to perform operations of the method to secure automated compensation of reciprocal debts of any of the preferred method embodiments.

It will be apparent to those skilled in the art that various modifications are conceivable to the above disclosed embodiments without departing from the scope of protection determined by the appended claims.

### List of references

- Un: users
- U_{N}: a plurality of users having at least three users
- UD₁....UDn: user devices
- AUn: anonymized users
- AU_{N}: a plurality of anonymized users matching the plurality of users U_{N}
- S1: first server
- CU1: identity computing unit
- CWU: credit worthiness external source, not represented graphically
- SDS: global statistic data source
- S2: second server
- DB2: database of the second server
- CU2: compensation computing unit

- Dx: all debts owed among the users in one iteration
- ADx: all debts owed among the anonymized users in one iteration
- C_{N}: plurality of compensation circles in one iteration for all users
- Cn: compensation circles
- RSCn: ranked compensation circles
- RSC_{N}: plurality of the ranked compensation circles
- ASCn: approved compensation circles

- USn: user Un sensitive data
- UDDn: user Un debt data
- USTn: user Un statistical data
- CCn: compensation criteria of the User Un
- GSD: global statistical data
- AUSn: anonymized AUn user sensitive data
- EUSn: encoded user statistical data potential future user Un debt data - not represented graphically

### Example of realization

- Uj, Uk, Um: three users
- UDj,UDk,UDm: user devices of the three users
- AUj, AUk, AUm: three anonymized users
- Dⱼₖ, Dₖₘ, Dₘⱼ: reciprocal debts of the three users
- AUSj, AUSk, AUSm: respective anonymized AUj, AUk, AUm user sensitive data
- ADⱼₖ, ADₖₘ, ADₘⱼ: reciprocal debts of the three anonymized users AUj, AUk, AUm
- RSC_{J}, RSC_{K}, RSC_{M}: respective pluralities of ranked compensation circles for the three anonymized users of the example of realization - not represented graphically
- RSC_{J-K-M}: intersection of the pluralities of ranked compensation circles RSC_{J} RSC_{K} and RSC_{M} not represented graphically
- USj, USk, USm: respective user Uj, Uk, Um sensitive data
- UDDj, UDDk UDDm,: respective user Uj, Uk, Um debt data
- USTj, USTk, USTm: respective user Uj, Uk, Um statistical data
- CCj, CCk, CCm: compensation criteria of the respective users Uj Uj, Uk, Um
- ASCj, ASCk, ASCm: approved compensation circles of the respective anonymized users AUj, AUk, AUm

## Claims

1. A method to secure automated compensation of reciprocal debts owed by at least three users (Un), provided with respective user devices (UDn),
**characterised in that** each user device (UDn) comprises:
user (Un) sensitive data (USn),
user (Un) statistical data (USTn),
user (Un) debt data (UDDn) for at least one debt of the user (Un) to another user (Un) from the at least three users (Un), and
a set of user (Un) compensation criteria (CCn),
and **in that** the method comprises the following steps in one iteration:
Step 1: carried out by an identity computing unit (CU1) of a first server (S1)
receiving the user (Un) sensitive data (USn) together with the corresponding user (Un) debt data (UDDn), the user (Un statistical data (USTn) and the set of user (Un) compensation criteria (CCn), from the user devices (UDn),
receiving global statistical data (GSD) about all (Un) users from one or more global statistic data sources (SDS),
Step 2: carried out by the identity computing unit (CU1)
Sub-step 2-1
encrypting the user (Un) sensitive data (USn) by using a private encryption key, outputting anonymized user (Aun) sensitive data (AUSn),
Sub-step 2-2
generating a user profile encoder,
breaking down the global statistical data (GSD) by statistical field, selecting one or more relevant statistical fields corresponding to the user (Un statistical data (USTn),
encoding the user (Un) statistical data (USTn) with the user profile encoder applied to the statistical data of the one or more relevant statistical fields, outputting encoded user statistical data (EUSn),
the encoding including at least one of the following:
quantizing the global statistical data (GSD) for the one or more relevant statistical fields, and
adding specific weights to the one or more relevant statistical fields,
sending the anonymized user (Aun) sensitive data (AUSn) together with the corresponding user (Un) debt data (UDDn), the user Un compensation criteria (CCn), and the encoded user statistical data (EUSn) to a compensation computing unit (CU2) of a second server (S2),
Step 3: carried out by the compensation computing unit (CU2)
receiving from the identity computing unit (CU1) the anonymized user (Aun) sensitive data (AUSn), the corresponding user (Un) debt data (UDDn), the user (Un) compensation criteria (CCn) and the corresponding encoded user statistical data (EUSn),
storing in a database (DB2) of the second server (S2) the anonymized user (Aun) sensitive data (AUSn), the corresponding user (Un) debt data (UDDn), the user (Un) compensation criteria (CCn and the corresponding encoded user statistical data (EUSn) received from the identity computing unit (CU1),
Step 4: carried out by the compensation computing unit (CU2)
creating a set of compensation rules based on the encoded user statistical data (EUSn) and storing same in the database (DB2),
computing a plurality of compensation circles (C_{N}) by applying a compensation algorithm to said user (Un) debt data (UDDn), based on the compensation rules, each compensation circle (Cn) of the plurality of compensation circles (C_{N}) comprising user (Un) debt data (UDDn) of concerned anonymized users (AUn),
selecting and ranking the compensation circles (Cn) that satisfy the user (Un) compensation criteria (CCn), outputting ranked compensation circles (RSCn) in descending order, forming a plurality of ranked compensation circles (RSC_{N}),
Step 5: carried out by the compensation computing unit (CU1)
receiving from the compensation computing unit (CU2) compensation requests for the concerned anonymized users (AUn) corresponding to each of the ranked compensation circles (RSCn) in descending order,
decrypting the anonymized user (Aun) sensitive data (AUSn) of the concerned anonymized users (AUn) by using the private encryption key, outputting the user (Un) sensitive data (USn) of the respective concerned users (Un),
forwarding the compensation requests to each respective user device (UDn) of the concerned users (Un) and displaying on the user devices (UDn) of all the concerned users (Un corresponding to the plurality of ranked compensation circles (RSC_{N}) for sending compensation approvals during a pre-determined period of time,
Step 6: carried out by the compensation computing unit (CU2)
receiving the compensation approvals from the user devices (UDn) of all the concerned users (Un by means of the identity computing unit (CU1),
executing the compensation of the at least one debt of the user (Un) to another user (Un) for the highest-ranking compensation circle (RSCn) in descending order, called approved compensation circle (ASCn),
storing the approved compensation circle (ASCn) in a digital ledger maintained by the database (DB2),
updating the plurality of compensation circles (C_{N}) by removal of the approved compensation circle (ASCn) and updating the user Un debt data (UDDn) for the next iteration of the method.

2. The method of claim 1, wherein
the ranked compensation circles (RSCn) are sequentially sent in descending order during the pre-determined period of time until receiving compensation approvals of all the concerned users (Un),
the compensation approvals are received automatically,

3. The method of claim 1, wherein the ranked compensation circles (RSCn) are simultaneously sent to the concerned users (Un).

4. The method of any of the claims 1 to 3, wherein the storing of the approved compensation circles (ASCn) in the digital ledger is locked with a digital ledger chain.

5. The method of any of the claims 1 to 4, wherein
the set of compensation rules based on the encoded user statistical data (EUSn) further comprises rules for identifying potential future user (Un) debts,
step 4 further comprises identifying the potential future user (Un) debts and adding corresponding potential future user (Un debts data to said user (Un) debt data (UDDn),
step 5 further includes displaying on the user devices (UDn) a pre-determined additional period of time for sending compensation approvals,
for the ranked compensation circles (RSCn) that include the potential future user (Un) debts, delaying the execution of the compensation in step 6 with a selectable delay.

6. The method of claim 5, wherein
step 1 further comprises receiving by the identity computing unit (CU1) of creditworthiness data for some of the users Un from a credit worthiness external source,
sub-step 2-1 further comprises calculating a User (Un) creditworthiness basic score,
step 3 further comprises sending the User (Un) creditworthiness basic score to the credit worthiness external source (CU2),
step 4 further comprises computing a User (Un) compensation score, merging the creditworthiness basic score with the User (Un) compensation score, outputting a User (Un) combined creditworthiness score and adding the User (Un) combined creditworthiness score to the set of compensation rules,
the set of compensation rules includes a threshold for the User (Un) creditworthiness score,
the selection and ranking of the compensation circles (Cn) in step 4 is made for the compensation circles (Cn) for which the User (Un) combined creditworthiness score is above the threshold.

7. A system for secure automated compensation of reciprocal debts owed by at least three users (Un),
**characterised in that** the system comprises:
at least three user devices (UDn) corresponding to the at least three users (Un), communicatively coupled to a first server (S1),
the first server (S1) comprising an identity computing unit (CU1), the identity computing unit (CU1) communicatively coupled to the at least three user devices (UDn),
a second server (S2) comprising a compensation computing unit (CU2) communicatively coupled to a database (DB2),
the identity computing unit (CU1) communicatively coupled to the compensation computing unit (CU2), and
one or more global statistic data source (SDS), communicatively coupled to the identity computing unit (CU1),
wherein the at least three user devices (UDn), the identity computing unit (CU1), the compensation computing unit (CU2), the database (DB2), and the one or more global statistic data source (SDS) are configured to apply the corresponding steps of the method of secure automated compensation of any of the claims 1 to 6.

8. The system of claim 7 wherein the first server (S1) and the second server (S2) are physically coupled such that to be embedded in one larger server entity.

9. The system of claim 7, wherein the first server (S1) and the second server (S2) are remotely placed one from another communicating via telecommunication means.

10. A first non-transitory computer-readable storage medium encoded with a first computer program, comprising instructions executable by the first server (S1) of the system of any of the claims 7 to 9, which, upon such execution, causes the first server (S1) to perform operations of the method to secure automated compensation of reciprocal debts of any of the claims 1 to 6.

11. A second non-transitory computer-readable storage medium encoded with a second computer program, comprising instructions executable by the second server (S2) of the system of any of the claims 7 to 9 which, upon such execution, causes the second server (S2) to perform operations of the method to secure automated compensation of reciprocal debts of any of the claims 1 to 6.

## Amended claims

### Amended claims in accordance with Rule 137(2) EPC.

1. A method to secure automated compensation of reciprocal debts owed by at least three users (Un), provided with respective user devices (UDn), each user device (UDn) being configured to comprise:
user (Un) sensitive data (USn),
user (Un) debt data (UDDn) for at least one debt of the user (Un) to another user (Un) from the at least three users (Un), and
a set of user (Un) compensation criteria (CCn),
wherein the method is performed by a system and comprises, in one iteration, the following steps:
**Step 1. Receiving** the user (Un) debt data (UDDn), and the set of user (Un) compensation criteria (CCn) from the user devices (UDn),
and receiving global statistical data (GSD) about all users (Un) from one or more global statistic data sources (SDS)
**Step 2. Computing** compensation circles (C_{N}) by applying a compensation algorithm to user (Un) debt data (UDDn), based on a set of compensation rules;
**Step 3. Forwarding** compensation requests to user devices (UDn) and displaying them for approval within a pre-determined period of time;
**Step 4. Receiving** the compensation approvals from the user devices (UDn);
**Step 5. Executing** the compensation of the at least one debt of the user (Un) to another user (Un), and **updating** said compensation circles (C_{N}) and user (Un) debt data (UDDn) for a next iteration of the method;
**characterized in that:**
- the system carrying out the method is a system comprising an identity computing unit (CU1) on a first server (S1) and a compensation computing unit (CU2) on a second server (S2), and
- the user devices (UDn) are further configured to comprise user (Un) statistical data (USTn),
**and in that the** method further comprises the following:
**Step 1** further comprises **receiving,** from the user devices (UDn), the user (Un) sensitive data (USn) together with the corresponding user (Un) statistical data (USTn) in addition to UDDn and CCn
wherein **Step 1** is carried out by the identity computing unit (CU1) of the first server (S1) and
Prior to **Step 2,** the following sub-steps are carried out by the identity computing unit (CU1):
**Sub-step 1.A**
encrypting the user (Un) sensitive data (USn) by using a private encryption key, thereby outputting anonymized user (Aun) sensitive data (AUSn),
**Sub-step 1.B**
generating a user profile encoder,
breaking down the global statistical data (GSD) by statistical field, selecting one or more relevant statistical fields corresponding to the user (Un) statistical data (USTn),
encoding the user (Un) statistical data (USTn) with the user profile encoder applied to the statistical data of the one or more relevant statistical fields, outputting encoded user statistical data (EUSn),
the encoding including at least one of the following:
quantizing the global statistical data (GSD) for the one or more relevant statistical fields, and
adding specific weights to the one or more relevant statistical fields,
- sending the corresponding user (Un) debt data (UDDn), the user (Un) compensation criteria (CCn) together with the anonymized user (AUn) sensitive data (AUSn) and the encoded user statistical data (EUSn) to the compensation computing unit (CU2) on the second server (S2),
**Step 2** is carried out by the compensation computing unit (CU2) of the second server (S2), and further comprises:
receiving from the identity computing unit (CU1) the corresponding user (Un) debt data (UDDn), the user Un compensation criteria (CCn) together with the anonymized user (AUn) sensitive data (AUSn) and the encoded user statistical data (EUSn),
storing, in a database (DB2) of the second server (S2), the corresponding user (Un) debt data (UDDn), the user Un compensation criteria (CCn) together with the anonymized user (AUn) sensitive data (AUSn) and the encoded user statistical data (EUSn),
creating a set of compensation rules based on the encoded user statistical data (EUSn) and storing same in the database (DB2),
computing a plurality of compensation circles (C_{N}) by applying a compensation algorithm to said user (Un) debt data (UDDn), based on the compensation rules, each compensation circle (Cn) of the plurality of compensation circles (C_{N}) comprising user (Un) debt data (UDDn) of concerned anonymized users (AUn),
selecting and ranking the compensation circles (Cn) that satisfy the user (Un) compensation criteria (CCn), outputting ranked compensation circles (RSCn) in descending order, forming a plurality of ranked compensation circles (RSC_{N}),
**Step 3** is carried out by the identity computing unit (CU1) and further comprises:
decrypting the anonymized user (Aun) sensitive data (AUSn) of the concerned anonymized users (AUn) by using the private encryption key, outputting the user (Un) sensitive data (USn) of the respective concerned users (Un),
forwarding the compensation requests to each respective user device (UDn) of the concerned users (Un) and displaying on the user devices (UDn) of all the concerned users (Un) corresponding to the plurality of ranked compensation circles (RSC_{N}) for sending compensation approvals during a pre-determined period of time,
**Step 4** is carried out by the compensation computing unit (CU2), and further comprises:
receiving the compensation approvals from the user devices (UDn) of all the concerned users (Un) by means of the identity computing unit (CU1),
**Step 5** is carried out by the compensation computing unit (CU2) and further comprises:
executing the compensation of the at least one debt of the user (Un) to another user (Un) for the highest-ranking compensation circle (RSCn) in descending order, called approved compensation circle (ASCn),
storing the approved compensation circle (ASCn) in maintained by the database (DB2),
and updating the plurality of compensation circles (C_{N}) by removal of the ASCn and updating the user (Un) debt data (UDDn) for the next iteration.

2. The method of claim 1, wherein
the ranked compensation circles (RSCn) are sequentially sent in descending order during the pre-determined period of time until receiving compensation approvals of all the concerned users (Un),
the compensation approvals are received automatically.

3. The method of claim 1, wherein the ranked compensation circles (RSCn) are simultaneously sent to the concerned users (Un).

4. The method of any of the claims 1 to 3, wherein the storing of the approved compensation circles (ASCn) in the digital ledger is locked with a digital ledger chain.

5. The method of any of the claims 1 to 4, wherein
the set of compensation rules based on the encoded user statistical data (EUSn) further comprises rules for identifying potential future user (Un) debts,
**step 2** further comprises identifying the potential future user (Un) debts and adding corresponding potential future user (Un) debts data to said user (Un) debt data (UDDn),
**step 3** further includes displaying on the user devices (UDn) a pre-determined additional period of time for sending compensation approvals,
for the ranked compensation circles (RSCn) that include the potential future user (Un) debts, delaying the execution of the compensation in step 4 with a selectable delay.

6. The method of claim 5, wherein
**step 1** further comprises receiving by the identity computing unit (CU1) of creditworthiness data for some of the users Un from a creditworthiness external source (CWU),
**sub-step 1.A** further comprises calculating a User (Un) creditworthiness basic score, and sending the User (Un) creditworthiness basic score to the compensation computing unit (CU2);
**step 2** further comprises computing a User (Un) compensation score, merging the creditworthiness basic score with the User (Un) compensation score, outputting a User (Un) combined creditworthiness score and adding the User (Un) combined creditworthiness score to the set of compensation rules,
the set of compensation rules includes a threshold for the User (Un) creditworthiness score,
the selection and ranking of the compensation circles (Cn) in **step 2** is made for the compensation circles (Cn) for which the User (Un) combined creditworthiness score is above the threshold.

7. A system for secure automated compensation of reciprocal debts owed by at least three users (Un),
**characterized in that** the system comprises:
at least three user devices (UDn), corresponding to the at least three users (Un), communicatively coupled to a first server (S1),
the first server (S1) comprising an identity computing unit (CU1), the identity computing unit (CU1) communicatively coupled to the at least three user devices (UDn),
a second server (S2) comprising a compensation computing unit (CU2) communicatively coupled to a database (DB2),
the identity computing unit (CU1) communicatively coupled to the compensation computing unit (CU2), and
one or more global statistic data sources (SDS), communicatively coupled to the identity computing unit (CU1),
wherein the at least three user devices (UDn), the identity computing unit (CU1), the compensation computing unit (CU2), the database (DB2), and the one or more global statistic data source (SDS) are configured to apply the corresponding steps of the method of secure automated compensation of any of the claims 1 to 6.

8. The system of claim 7 wherein the first server (S1) and the second server (S2) are physically coupled such that to be embedded in one larger server entity.

9. The system of claim 7, wherein the first server (S1) and the second server (S2) are remotely placed one from another communicating via telecommunication means.

10. A first non-transitory computer-readable storage medium encoded with a first computer program, comprising instructions executable by the first server (S1) of the system of any of the claims 7 to 9, which, upon such execution, causes the first server (S1) to perform operations of the method to secure automated compensation of reciprocal debts of any of the claims 1 to 6.

11. A second non-transitory computer-readable storage medium encoded with a second computer program, comprising instructions executable by the second server (S2) of the system of any of the claims 7 to 9 which, upon such execution, causes the second server (S2) to perform operations of the method to secure automated compensation of reciprocal debts of any of the claims 1 to 6.
